# EUROPEAN PATENT APPLICATION

(11) **EP 1 918 152 A2**
(43) Date of publication of application: **07.05.2008**
(21) Application number: 07446007.2
(22) Date of filing: 02.11.2007
(51) Int. Cl.: B60K 17/30, B62D 7/02

(54) **A drive unit and a powered vehicle**

(30) Priority: 02.11.2006 SE 0602315
(71) Applicant: Visual Act Scandinavia AB, 132 35 Saltsjö-Boo (SE)
(72) Inventor: Boll, Daniel, 112 57 Stockholm (SE); Fainberg, Jim, 0654 Oslo (NO); Philipson, Niklas, 116 46 Stockholm (SE)
(74) Representative: Karlsson, Leif Karl Gunnar

(57) **Abstract**

The present invention relates to a drive unit (100) comprising a rolling means (102) intended to be in frictional engagement with a surface (u) over which said drive unit (100) is intended to move. The drive unit (100) also comprises a first driving means (104) and a second driving means (106), co-operatively operable to provide both propulsion and steering of the drive unit (100), while eliminating slippage between the rolling means (102) and the surface (u). The second driving means (106) is operable to rotate a rotatable support means (108) about a center axis (c. a.). The first driving means (104) is operable to, via a gear means (110), rotate the rolling means (102) about a rolling axis (r. a.). The rolling means (102) is displaced a predetermined distance from the center axis (c. a.). The first driving means (104) is arranged in such a way that the support means (108) is able to rotate unlimitad.

## Description

### Field of the invention

The present invention relates in a first aspect to a drive unit.

In a second aspect the present invention relates to a powered vehicle.

### Description of related art

The theatre has automated much of the equipment used for the movement of scenery and lighting. Most of stage activity involves simply moving scenery about the stage. Automated systems for doing this have been limited by poor radio communication, lack of accuracy and navigation, high noise and high costs.

The document US Patent No. 5,823,884 discloses a powered stage wagon comprising a chassis to which there is mounted a plurality of rolling support means, each of which is located at a respective corner of the chassis. The powered stage wagon also comprises a first and a second drive means, both mounted on the chassis in engagement with the surface over which the stage wagon is to move and are mutually spaced. The two drive means both comprise a wheel which is mounted for rotation about a drive shaft. At the end of the drive shaft remote from the wheel there is provided both a gear-box and a motor, so the motor drives the drive shaft via the gear-box so as to cause a rotation of the wheel. The entire assembly comprising the wheel, the drive shaft, the gear-box and the motor is mounted on a circular support member which is itself mounted for rotation about an axis perpendicular to the drive shaft. By actuating a second motor it is possible to cause the rotation of the circular support member and thereby alter the relative orientation of the wheel with respect to the surface over which the stage wagon is to move. By actuating the first motor it is possible to control the speed with which the stage wagon moves in the direction determined by the second motor.

One main disadvantage with the stage wagon according to the document US-5,823,884 is that it causes damage to the floor surface caused by slippage, due to rotation of the drive wheel at slow speeds or at standstill. One way of trying to eliminate this problem is the use of special floor materials or require the wagon to move in order to rotate the wheel, limiting the types of movement the wagon can make. Another way of trying to eliminate this problem is to separate the functions of locomotion and steering, limiting the types of movement the wagon can make.

The document US Patent No. 5,456, 332 discloses a multi-degree-of-freedom (MDOF) vehicle, wherein he slippage of the wheels is eliminated and/or becomes small by allowing the distance between the two drive assemblies on the same vehicle to be monitored and to use a displacement monitoring signal to control the function of the vehicle. This document discloses a system (see e.g. Fig. 4) which requires two wheels in a drive assembly and without any drive engine for rotation. This means that this system requires rather much space, which restricts the field of application and makes it difficult to build and to balance smaller vehicles. The wheels need to have contact with the surface all the time. If a wheel loses contact with the surface, the drive assembly and the whole system will completely lose control.

The document US Patent No. 3,404,746 discloses a motor-driven vehicle which can change direction at right angles including at least one castor wheel mounted on the front and rear thereof respectively and at least one driving wheel intermediate the front and rear wheels. The driving wheel is pivotaly mounted on a vertical axis and is connected to motor means which pivots therewith and imparts directional drive to the vehicle. A considerable disadvantage with this solution is that the wheels cannot be rotated unless the vehicle at the same time is moved.

The document US Patent No. 5,924,512 discloses an omni-directional vehicle which supports the steering shaft M of the driving wheel 1 serving also as a steering wheel through the shaft stub 8 on the body 7 at the point displaced by a distance S horizontally from the ground contact point of the driving wheel 1, turns the driving wheel 1 by the motor 5 and rotates the steering shaft M by the motor 12 to translate the body 7 back and forth as well as sidewise as desired. The vehicle is controlled to move on the reference trajectory based on the ratio of the angular velocity of the driving wheel 1 and the angular velocity of the steering shaft M. The ratio is calculated based on the position and orientation of the body 7 and the steering angle of the steering shaft M, detected by the sensors, and the reference trajectory of the vehicle. A considerable disadvantage with this solution is that the wheels cannot be rotated unless the vehicle at the same time is moved.

The document US Patent No. 5,432,416 discloses a self-propelled robot which has a robot body on which a drive wheel is mounted. The drive wheel is connected to a member that can be turned about a vertical axis for steering the robot. A propulsion drive mechanism is mounted on that member for transmitting a propulsion drive to the drive wheel. The propulsion drive mechanism includes a clutch mechanism for disengaging the propulsion drive when the drive wheel encounters excessive resistance to travel. The clutch mechanism includes a spring biased clutch element mounted on an internal spline shaft of the drive wheel. This solution has traditional wheels which are rotated without "offset". This means that the floor will be damaged when the robot is rotated, at slow or zero translational speed.

The document US Patent No. 4,044,853 discloses a driverless vehicle which has an elongated frame support at each of its ends by a steerable wheel and a castor wheel, the steerable wheels being mounted in longitudinal alignment, and one of the steerable wheels is reversible driven. Each steerable wheel is individually controllable by a guidance system including a steering motor, forward and reverse direction sensing units which obtain a steering signal from a guide path, and a circuit for controlling the steering motor in response to the steering signal. In automatic operation of the vehicle, the individually controllable steerable wheels will follow a common guide path or separate guide paths so that the vehicle can move forwards, backwards and laterally. Manual controls enable an operator to steer and energize the drive wheel, to steer the other steerable wheel and to separately activate and deactivate the guidance systems for the steerable wheels. This solution also has traditional wheels which are rotated without "offset".

The document US Patent No. 3,912,037 discloses a transportation system comprising a plurality of individual vehicles, intended particularly for assembling structural units such as motor vehicles from component structural elements. In the transportation system there is provided a plurality of such vehicles and means for effecting starting and stopping thereof and for guiding same along a predetermined path. Said vehicles are provided with wheeled supporting structure, certain thereof being pivotal for guidance thereof and at least one selected one thereof carrying an induction sensitive probe arranged to follow a predetermined path emanating electromagnetic signals. Selective means sensitive to predetermined frequencies or combinations thereof are provided for controlling the guidance of said vehicles including starting and stopping thereof. This vehicle also has traditional wheels which are rotated without "offset". These wheels are controlled by a control line or an induction loop.

The document SE Patent No. 525 970 discloses a drive unit which uses two motors in tandem to handle steering and propulsion. An essential improvement is the placement of the drive wheel offset from and at a right angle to the unit's axis of rotation. The motion of the drive wheel is tangent to a circle drawn around the unit's axis of rotation. The offset allows the unit to rotate with only minimal friction against the floor, even at slow or zero translational speed. The problem of wear on the wheel and the floor due to rotational friction is eliminated. This, in turn, allows an automated vehicle using the drive unit to achieve extremely high levels of dead reckoned accuracy while making different types of motions including simultaneous translations and rotations.

The driving-gear motor for the drive unit in accordance with SE-525 970 is placed on the rotating plate. The wheel is attached directly to this gear-motor. This solution has despite its excellent performance, a number of minor, but nevertheless, disadvantages:
- The rotation of the unit is limited by the cable providing power to this motor.
- The required form factor of the motor places special requirements on the selection of a suitable motor and gear.
- The limitations on the selection of a gear reduce the ability of the designer to select different gear ratios and therefore different speeds and capacities of the drive unit.
- The size of the motor is limited, liming its moment of inertia and therefore limiting the capacity of the drive unit.

### Summary of the invention

It is an object of the present invention to solve the above mentioned problems.

According to the present invention there is provided in a first aspect a drive unit comprising a rolling means intended to be in frictional engagement with a surface over which the drive unit is intended to move. The drive unit also comprises a first driving means and a second driving means, co-operatively operable to provide both propulsion and steering of the drive unit while eliminating slippage between the rolling means and the surface. The second driving means is operable to rotate a rotatable support means about a center axis (c. a.). The first driving means is operable to, via a gear means, rotate the rolling means about a rolling axis (r. a.). The rolling means is displaced a predetermined distance from the center axis (c. a.). The first driving means is arranged in such a way that the support means is able to rotate unlimited.

An advantage with this drive unit is that the rotation of the drive unit is unlimited. This allows total freedom of movement for any vehicle using this drive unit. A vehicle making use of a least two such drive units can rotate indefinitely or make any combination of rotation and translation.

Another advantage with this drive unit is that the placement of the first driving means and the gear means makes that they can be selected freely.

Another advantage with this drive unit is that the driving means and the gear means can be selected to allow any gear ratio and therefore free selection of speed and capacity.

Yet another advantage with this drive unit is that the size of the first driving means is not limited. This allows drive units with higher capacity to be built using the same technology.

A further advantage in this context is achieved if said rolling axis (r. a.) is perpendicular to said center axis (c. a.).

Furthermore, it is an advantage in this context if said gear means is a right angle gear arranged at the intersection of said center axis (c. a.) and said rolling axis (r. a.).

A further advantage in this context is achieved if said right angle gear at one end is provided with a first sprocket means driven by said first driving means by way of a first transmission means.

Furthermore, it is an advantage in this context if said first transmission means is a chain which is engaged with said first sprocket means and a first worm gear driven by said first driving means.

According to another embodiment, it is an advantage if said first transmission means is a belt which is engaged with said first sprocket means and a first worm gear driven by said first driving means.

A further advantage in this context is achieved if said drive unit also comprises a first tension wheel which is engaged with said chain/belt.

According to another embodiment, it is an advantage if said first transmission means is a first toothed wheel driven by said first driving means, wherein said first toothed wheel is engaged with said first sprocket means.

According to another embodiment, it is an advantage if said first driving means is a direct driving means arranged directly above said support means and connected to an axle of said right angle gear.

Furthermore, it is an advantage in this context if said support means on its circumference is provided with a second sprocket means driven by said second driving means by way of a second transmission means.

A further advantage in this context is achieved if said second transmission means is a chain which is engaged with said second sprocket means and a second worm gear driven by said second driving means.

Furthermore, it is an advantage in this context if said drive unit also comprises a second tension wheel which is engaged with said chain.

According to another embodiment, it is an advantage if said second transmission means is a second toothed wheel driven by said second driving means, wherein said second toothed wheel is engaged with said second sprocket means.

A further advantage in this context is achieved if said rotatable support means is supported by a ball bearing means.

Furthermore, it is an advantage in this context if said first and second driving means each is a servomotor.

A further advantage in this context is achieved if said rolling means is a wheel.

Furthermore, it is an advantage in this context if said support means is a round plate.

A further advantage in this context is achieved if said drive unit also comprises a sensor means arranged in the vicinity of said rotatable support means, which sensor means is operable to detect the position of said rotatable support means.

Another object of the present invention is to provide a powered vehicle comprising a chassis, at least three low friction means mounted on the chassis for interaction with a surface over which the vehicle is to move. At least two of the low friction means is a drive unit according to the present invention.

An advantage with the powered vehicle according to the present invention is that it can rotate indefinitely or make any combination of rotation and translation.

Another advantage with the powered vehicle according to the present invention is that it is scalable, due to the fact that the driving means and the gear means can be selected to allow any gear ratio and therefore free selection of speed and capacity.

A further advantage in this context is achieved if said powered vehicle comprises four low friction means, each situated at a corner of said chassis, and in that two of said four low friction means are drive units, each arranged at two diagonally arranged corners of said powered vehicle.

Furthermore, it is an advantage in this context if said powered vehicle comprises four low friction means, and in that two of said four low friction means are drive units.

A further advantage in this context is achieved if said low friction means which is/are not said drive units/unit, each is an air cushion means and/or a felt cushion means and/or a rolling means.

Furthermore, it is an advantage in this context if said powered vehicle also comprises a wireless communication means for receiving control signals from a remote computer system to control said drive units.

It should be emphasized that the term "comprise/comprising" when used in this specification is taken to specify the presence of stated features, steps of components but does not preclude the presence of one or more other features, integers, steps, components or groups thereof.

### Brief description of the drawings

Embodiments of the invention will now be described with a reference to the accompanying drawings, in which:
- Fig. 1: shows a side view from above of a drive unit according to the present invention;
- Fig. 2: shows a first side view, partly in cross section, of a drive unit according to fig. 1, mounted on a vehicle,
- Fig. 3: shows a second side view, partly in cross section, of a drive unit according to fig. 1, mounted on a vehicle
- Fig. 4: shows a third side view, partly in cross section, of a drive unit according to fig. 1, mounted on a vehicle; and
- Fig. 5: shows a schematic diagram of a powered vehicle according to the present invention.

### Detailed description of embodiments

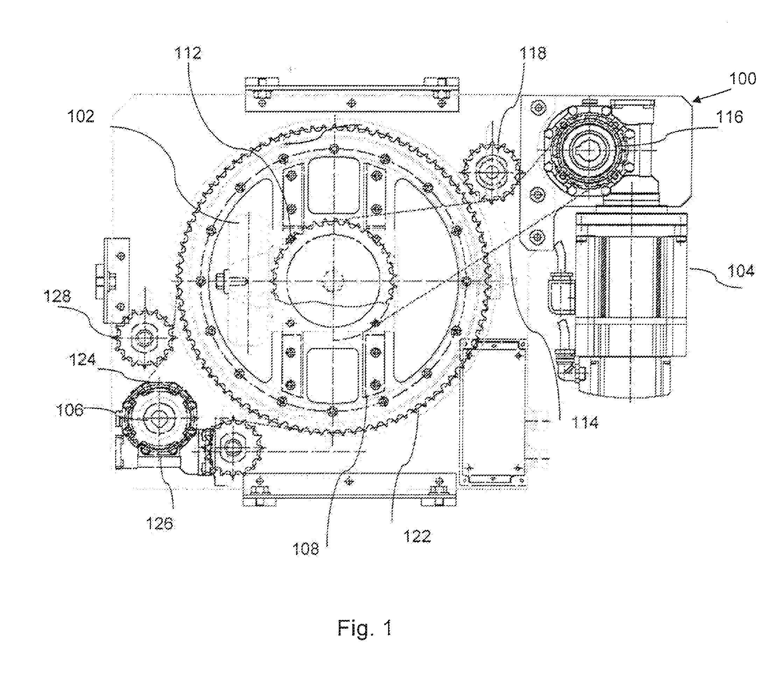

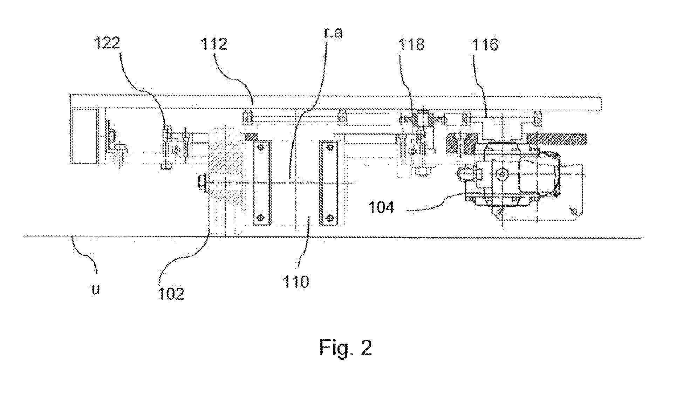

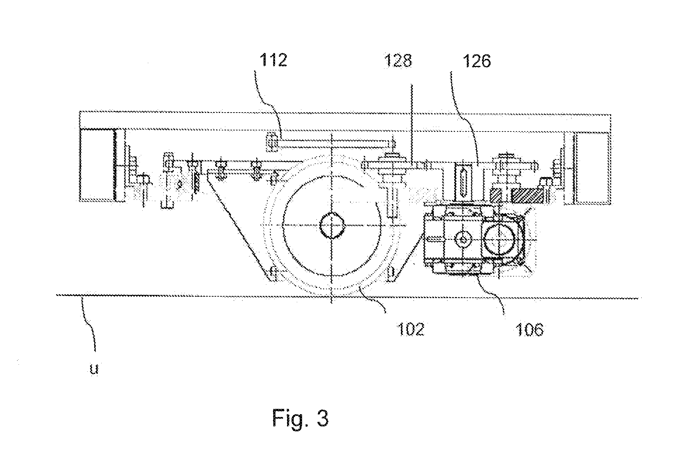

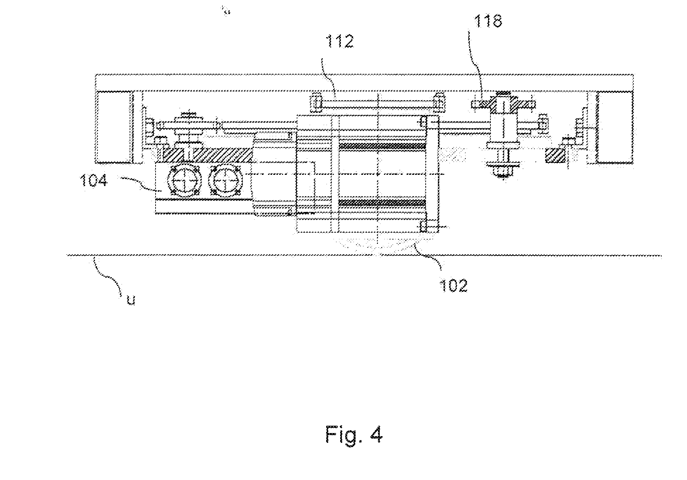

In fig. 1 there is disclosed a side view from above of a drive unit 100 according to the present invention. The drive unit 100 comprises a rolling means 102 intended to be in frictional engagement with a surface (u) (see e. g. fig. 2) over which said drive unit 100 is intended to move. Preferably, the rolling means 102 is a wheel 102. The drive unit 100 also comprises a first driving means 104, and a second driving means 106, co-operatively operable to provide both propulsion and steering of the drive unit 100. The drive unit 100 also comprises a rotatable support means 108. The second driving means 106 is operable to rotate the support means 108 about a center axis (c. a.). The first driving means 104 is operable to, via gear means 110, rotate the rolling means 102 about a rolling axis (r. a.). The rolling axis (r. a.) is perpendicular to the center axis (c. a.). As is apparent from fig. 1, the rolling means 102 is displaced a predetermined distance from the center axis (c. a.). In one preferred embodiment of the drive unit 100, which is disclosed in fig. 1 - 4, the gear means 110 is a right angle gear 110 arranged at the intersection of the center axis (c. a.) and he rolling axis (r. a.). As is apparent in fig. 1, the right angle gear 110 is at one end provided with a first sprocket means 112 driven by the first driving means 104 by way of a first transmission means 114. In the embodiment of the drive unit 100, disclosed in fig. 1, the first transmission means 114 is a chain 114 which is engaged with the first sprocket means 112 and a first worm gear 116 driven by the first driving means 104. As also is apparent in fig. 1, the drive unit 100 also comprises a first tension wheel 118 which is engaged with the chain 114. The support means 108 is on its circumference provided with a second sprocket means 122 driven by he second driving means 106 by way of a second transmission means 124. In the embodiment of the drive unit 100 disclosed in fig. 1 - 4, the second transmission means 124 is a chain 124 which is engaged with the second sprocket means 122 and a second worm gear 126 driven by the second driving means 106. As also is apparent in fig. 1, the drive unit 100 also comprises a second tension wheel 128 which is engaged with the chain 124.

According to another embodiment of the drive unit 100 according to the present invention, the first transmission means 114 is a belt 114 which is engaged with the first sprocket means 112 and the first worm gear 116 driven by the first driving means 104. The belt 114 is also engaged with the first tension wheel 118.

According to yet another embodiment of the drive unit 100 according to the present invention, the first transmission means 114 is a first toothed wheel 114 (not disclosed) driven by the first driving means 104, wherein the first toothed wheel 114 is engaged with the first sprocket means 112.

According to yet another embodiment of the drive unit 100 according to the present invention, the first driving means 104 is a direct driving means 104 (not disclosed) arranged directly above the support means 108 and connected to an axle (not disclosed) of the right angle gear 110.

Preferably, the rotatable support means 108 is supported by a ball bearing means (not disclosed).

Preferably, the first and second driving means 104, 106, is each a servomotor 104, 106.

Preferably, the rotatable support means 108 is a round plate 108.

According to another embodiment of the drive unit 100 according to the present invention, the drive unit 100 also comprises a sensor means (not disclosed) arranged in the vicinity of the rotatable support means 108, which sensor means is operable to detect the position of the rotatable support means 108.

In fig. 2 - 4 there is also disclosed another advantage with the drive unit 100, i.e. the relative placement of the servomotors 104, 106 allows the drive unit 100 to be of a low height.

It is to be noted that said gear mans disclosed in fig. 1-4, also can be a helical bevel gear or a helical worm gear.

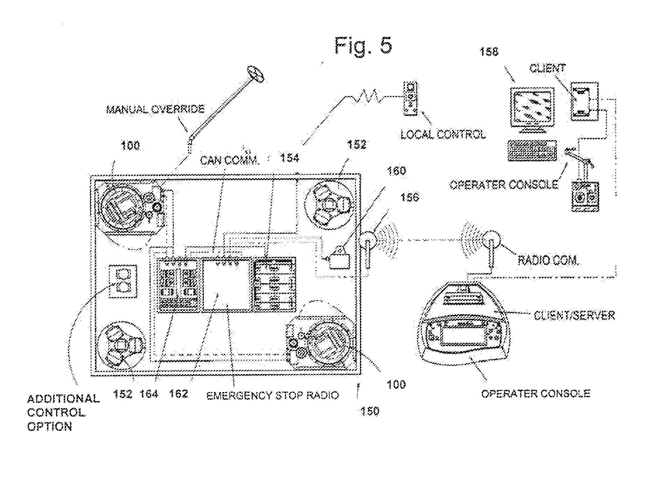

In fig. 5 there is disclosed a schematic diagram of a powered vehicle 150 according to the present invention. This vehicle 150 comprises two drive units 100, of the same kind disclosed in fig. 1, and two passive rolling means 152. The two drive units 100 are arranged in two diagonally arranged corners of the vehicle 150 and the two passive rolling means 152 are arranged in the two other corners of the vehicle 150. The vehicle 150 is e.g. powered by a battery pack 154. The vehicle 150 also comprises a wireless communication means 156 for communicating with a remote computer system 158 to control said drive unit 100, i.e. the movement and steering of the vehicle 150. The vehicle 150 also comprises a laser navigation unit 180, e.g. a laser scanner which makes use of several reflectors mounted along the perimeter of e.g. the stage area. The vehicle 150 also comprises a central processing unit 162 which is connected to the laser navigation unit 160, the wireless communication means 156, the battery pack 154 and a number of servo amplifiers 164 which in turn are connected to the drive units 100.

It is to be noted that said powered vehicle (not disclosed) according to another embodiment can have at least three low friction means, wherein at least two of the low friction means each is a drive unit 100 (see fig. 1 - 4).

Different examples of a low friction means, other than said drive unit 100, is an air cushion means, a felt cushion means and a rolling means.

The design of the drive unit 100 according to the present invention, achieves an advantage in relation to the drive unit disclosed in SE Patent No. 525 970 by removing the driving gear-motor from the rotating support plate. The motor can be placed beside the support plate and the power to the drive wheel is transferred over a mechanical link. The defining part of the mechanical link can be a right angle gear place where the axis of the drive unit 100 meets the axis of the wheel 102. The right angle gear 110 can be driven by a chain 114, belt 114, system of toothed wheels, or by a direct drive motor. This design, however, removes all of the disadvantages noted above for the drive unit and powered vehicle according to SE 525 970, while retaining all of the advantages.

The further advantages with this drive unit and powered vehicle according to the present invention are:
- The rotation of the drive unit 100 is unlimited. This allows total freedom of movement for any vehicle using the drive unit 100. A vehicle can rotate indefinitely or make any combination of rotation and translation.
- The motor and gear are place beside (or above) the support plate and can be selected freely.
- The motor, gear and possible chain connection can be selected to allow any gear ratio and therefore free selection of speed and capacity.
- The size of the motor is not limited; it can be increased to add power of inertia. This allows drive units with higher capacity to be built using the same technology.
- An additional advantage to the new design is lower noise due to the use of a worm gear or direct drive motor.

It is to be noted that the invention does not only relate to a stage wagon, but to a powered vehicle which can be used in many different applications, such as robotics and in material handling.

The invention is not limited to the embodiments described in the foregoing. It will be obvious that many different modifications are possible within the scope of the following claims.

## Claims

1. A drive unit (100) comprising a rolling means (102) intended to be in frictional engagement with a surface (u) over which said drive unit (100) is intended to move, a first driving means (104) and a second driving means (106), co-operatively operable to provide both propulsion and steering of said drive unit (100) while eliminating slippage between said rolling means (102) and said surface (u), wherein said second driving means (106) is operable to rotate a rotatable support means (108) about a center axis (c. a.), **characterized in that** said first driving means (104) is operable to, via a gear means (110), rotate said rolling means (102) about a rolling axis (r. a.), wherein said rolling means (102) is displaced a predetermined distance from said center axis (c. a.), and **in that** said first driving means (104) is arranged in such a way that said support means (108) is able to rotate unlimited.

2. A drive unit (100) according to Claim 1, **characterized in that** said rolling axis (r. a.) is perpendicular to said center axis (c. a.).

3. A drive unit (100) according to Claim 1 or 2, **characterized in that** said gear means (110) is a right angle gear (110) arranged at the intersection of said center axis (c. a.) and said rolling axis (r. a.).

4. A drive unit (100) according to Claim 3, **characterized in that** said right angle gear (110) at one end is provided with a first sprocket means (112) driven by said first driving means (104) by way of a first transmission means (114).

5. A drive unit (100) according to Claim 4, **characterized in that** said first transmission means (114) is a chain (114) which is engaged with said first sprocket means (112) and a first worm gear (116) driven by said first driving means (104).

6. A drive unit (100) according to Claim 4, **characterized in that** said first transmission means (114) is a belt (114) which is engaged with said first sprocket means (112) and a first worm gear (116) driven by said first driving means (104).

7. A drive unit (100) according to Claim 5 or 6, **characterized in that** said drive unit (100) also comprises a first tension wheel (118) which is engaged with said chain/balt (114).

8. A drive unit (100) according to Claim 4, **characterized in that** said first transmission means (114) is a first toothed wheel (114) driven by said first driving means (104), wherein said first toothed wheel (114) is engaged with said first sprocket means (112).

9. A drive unit (100) according to Claim 3, **characterized in that** said first driving means (104) is a direct driving means (104) arranged directly above said support means (108) and connected to an axle of said right angle gear (110).

10. A drive unit (100) according to any one of Claims 1 - 9, **characterized in that** said support means (108) on its circumference is provided with a second sprocket means (122) driven by said second driving means (106) by way of a second transmission means (124).

11. A drive unit (100) according to Claim 10, **characterized in that** said second transmission means (124) is a chain (124) which is engaged with said second sprocket means (122) and a second worm gear (126) driven by said second driving means (106).

12. A drive unit (100) according to Claim 11, **characterized in that** said drive unit (100) also comprises a second tension wheel (128) which is engaged with said chain (124).

13. A drive unit (100) according to Claim 10, **characterized in that** said second transmission means (124) is a second toothed wheel (124) driven by said second driving means (106), wherein said second toothed wheel (124) is engaged with said second sprocket means (122).

14. A drive unit (100) according to any one of Claims 1-13, **characterized in that** said rotatable support means (108) is supported by a ball bearing means.

15. A drive unit (100) according to any one of Claims 1 - 14, **characterized in that** said first and second driving means (104, 106) each is a servomotor (104, 106).

16. A drive unit (100) according to any one of Claims 1 - 15, **characterized in that** said rolling means (102) is a wheel (102).

17. A drive unit (100) according to any one of Claims 1-16, **characterized in that** said support means (108) is a round plate (108).

18. A drive unit (100) according to any one of Claims 1 - 17, **characterized in that** said drive unit (100) also comprises a sensor means arranged in the vicinity of said rotatable support means (108), which sensor means is operable to detect the position of said rotatable support means (108).

19. A powered vehicle (150) comprising a chassis, at least three low friction means mounted on said chassis for interaction with a surface over which said vehicle (150) is to move, **characterized in that** at least two of said low friction means each is a drive unit (100) according to any one of Claims 1-18.

20. A powered vehicle (150) according to Claim 19, **characterized in that** said powered vehicle (150) comprises four low friction means, each situated at a corner of said chassis, and **in that** two of said four low friction means are drive units (100), each arranged at two diagonally arranged corners of said powered vehicle (150).

21. A powered vehicle (150) according to Claim 19, **characterized in that** said powered vehicle (150) comprises four low friction means, and **in that** two of said four low friction means are drive units (100).

22. A powered vehicle (150) according to any one of claims 19 - 21, **characterized in that** said low friction means which is/are not said drive units/unit (100), each is an air cushion means and/or a felt cushion means and/or a rolling means.

23. A powered vehicle (150) according to anyone of Claims 19 - 22, **characterized in that** said powered vehicle (150) also comprises a wireless communication means for receiving control signals from a remote computer system to control said drive units (100).
